# EUROPEAN PATENT APPLICATION

(11) **EP 1 707 959 A1**
(43) Date of publication of application: **04.10.2006**
(21) Application number: 04747283.2
(22) Date of filing: 09.07.2004
(51) Int. Cl.: G01N 30/84, G01N 30/74, B01J 20/287, G01N 31/10

(54) **DEVICE AND METHOD FOR ANALYZING POLYCYCLIC AROMATIC HYDROCARBON HAVING NITRO GROUP IN DIESEL PARTICULATE**

(30) Priority: 17.07.2003 JP 2003275806
(71) Applicant: Isuzu Motors Limited, Shinagawa-ku, Tokyo 140-0013 (JP)
(72) Inventor: SHIBATA, Keiko, Isuzu Advanced Engineering Ctr Ltd, Fujisawa-shi Kanagawa 252-0806 (JP)
(74) Representative: Modiano, Micaela Nadia
(86) International application number: PCT/JP2004/009815
(87) International publication number: WO 2005/008237

(57) **Abstract**

The invention provides an apparatus and method for efficiently analyzing nitropolycyclic aromatic hydrocarbon contained in diesel particulates.

The invention comprises a step of extracting soluble organic fraction from diesel particulates contained in the exhaust of a diesel engine using a solvent, a step of concentrating and drying the extraction obtained by the extraction step, and a step of separating and extracting the solution via high-performance liquid chromatograph, wherein the separation step via the high-performance liquid chromatograph comprises a separation step using a silica gel/C8 column, a reduction step using an alumina/Pt-Rh reduction column, and a separation step using an ODS column, and further comprises a subsequent step of quantifying the nitropolycyclic aromatic hydrocarbon using a fluorescence detector.

## Description

### TECHICAL FIELD

The present invention relates to an apparatus and method for analyzing nitropolycyclic aromatic hydrocarbons contained in suspended particulate matters in the atmosphere, and more specifically, relates to an apparatus and method for analyzing the nitropolycyclic aromatic hydrocarbons contained in diesel particulates in the exhaust of diesel engines.

### BACKGROUND ART

Diesel particulates contained in the exhaust of diesel engines are generated from unburned components from the fuel and the lubricant being condensed and aggregated, and they constitute an aggregate in which soluble organic fractions that dissolve in an organic solvent (hereinafter abbreviated as SOF) and insoluble organic fractions such as sulfate, nitrate, elemental carbon and metal that do not dissolve in an organic solvent (hereinafter abbreviated as ISOF) are mixed in complex manner. Further, the composition of the diesel particulates is strongly affected by fuel, lubricant, engine type, operating condition and other various conditions. Nitropolycyclic aromatic hydrocarbons such as dinitroarene are contained in the SOF of the diesel particulates, whose quantity may be extremely small, but they have such high carcinogenicity that researches are now underway to develop methods for analyzing the same along with benzo[a]pyrene.

A typical method for analyzing nitropolycyclic aromatic hydrocarbons is disclosed (refer for example to patent document 1), which includes extracting an SOF using an organic solvent for SOF separation, concentrating and drying the same in order to enhance analysis sensitivity, and a pretreatment for enhancing the sensitivity using a high-performance liquid chromatograph - fluorescence detector or high-performance liquid chromatograph - chemiluminescence detector.

Patent document 2 discloses a dinitroarene analyzer comprising a sample introducing unit for introducing a sample containing dinitroarene, an active hydrogen induction-type metal catalyst column in the subsequent stage of the sample introducing unit for reducing the dinitroarene, a separation column for a liquid chromatograph in the subsequent stage of the metal catalyst column for separating the reduced component, and a detector unit for detecting the separated reduced component in the subsequent stage of the separation column.

Patent document 3 discloses a nitrogen-containing organic substance analyzer comprising a reduction column for reducing the nitrogen-containing organic substance, a separation column for separating the nitrogen-containing organic substance, a means for adding a reaction reagent to the reduced and separated nitrogen-containing organic substance for causing chemiluminescence emission for detection, andameans for setting the reduction column arbitrarily to a temperature within the range of 90 to 150 °C, so that the nitrogen-containing organic substance is reduced within the temperature range of 90 to 150 °C.

Patent Document 1:
   Japanese Patent Application Laid-Open Publication No. 2000-249633
Patent Document 2:
   Japanese Patent Application Laid-Open Publication No. H07-253420
Patent Document 3:
   Japanese Patent Application Laid-Open Publication No. 2001-21497

### SUMMARY OF THE INVENTION

### PROBLEM TO BE SOLVED BY THE INVENTION

In the methods for analyzing the nitropolycyclic aromatic hydrocarbon that exist only as a trace in diesel particulates, the method using fluorescence detection has low sensitivity, and thus it was considered not suitable to carry out quantitative analysis. Generally, it is said that the sensitivity of fluorescence detection is one-tenth the sensitivity of chemiluminescence detection. Especially, one large cause of the low sensitivity is the low reduction efficiency of the reduction column for reducing the nitropolycyclic aromatic hydrocarbon to amino polycyclic aromatic hydrocarbon, which is a fluorescent substance. However, even according to chemiluminescence detection, there was a drawback that the manufacture and management of two lines of buffer solutions were troublesome, the work time was long, and the testing device had become complex due to the additional devices for the buffer solution such as the reaction pump, the reaction tank and the reaction coil.
The present invention provides a method for analyzing nitropolycyclic aromatic hydrocarbons promptly and with high sensitivity using a high-performance liquid chromatograph - fluorescence detector.

### MEANS TO SOLVE THE PROBLEM

In order to solve the problems mentioned above, the present invention provides an apparatus for analyzing nitropolycyclic aromatic hydrocarbon comprising, as basic means, a separation column for separating an isomer of nitropolycyclic aromatic hydrocarbon, a reduction column for aminating the separated nitropolycyclic aromatic hydrocarbon, and a fluorescence detector.

### EFFECTS OF THE INVENTION

As described, the present invention provides an apparatus and a method for effectively analyzing with high accuracy the nitropolycyclic aromatic hydrocarbon contained in the diesel particulates from the exhaust of diesel engines.

### BRIEF DESCRIPTION OF THE DRAWINGS

FIG. 1 is a flowchart showing an embodiment of the present invention; and
FIG. 2 is a chromatograph showing the separated status.

### BEST MODE FOR CARRYING OUT THE INVENTION

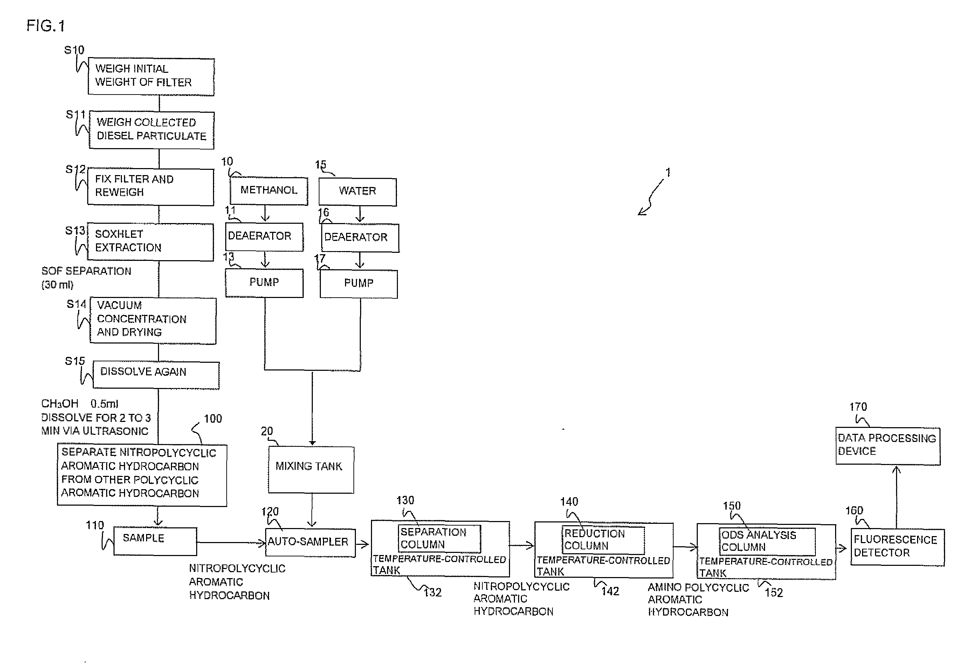

FIG. 1 is an explanatory view showing the preferred embodiment for carrying out the apparatus and method for analyzing the nitropolycyclic aromatic hydrocarbon contained in diesel particulates according to the present invention.
The analyzing apparatus denoted as a whole by reference number 1 includes a methanol supply device 10, a deaerator 11 and a feed pump 13 for sending deaired methanol to a mixing tank 20. Similarly, it includes a water supply device 15, a deaerator 16 and a pump 17 for sending deaired water to the mixing tank 20.
The methanol water mixed to a determinate quantity in the mixing tank 20 is sent to an auto-sampler 120.

On the other hand, the sample of nitropolycyclic aromatic hydrocarbon contained in the diesel particulates which is the object of analysis is prepared according to the process described below.
In step S10, the initial weight of a Teflon (registered trademark) coated filter with a diameter of 70 mm is weighed.
Next, in step S11, diesel particulates are collected on the 70-mm Teflon coated filter, which is placed for at least two hours in a temperature-controlled room with the temperature set to 25 degrees and humidity set to 50 %RH, then the particulates are weighed.

In step S12, the filter is rolled into a size small enough to fit into a glass container for extraction, and then it is tied up with a nickel wire and subjected to reweighing.
In step S13, it is subjected to Soxhlet extraction for more than eight hours using dichloromethane as organic solvent in order to separate the SOF.
In step S14, the extraction is transferred to a glass tube for a concentrator and placed in a vacuum solvent concentrator to be dried for approximately one and a half hours. (The remaining filter is dried and the extracted particle weight is weighed.)

In step S15, the dried SOF is first dissolved in a determinate quantity (approximately 0.5 ml) of methanol solvent for high-performance liquid chromatography, and then using aluminum foil as a lid, the portion of a centrifugation tube containing the solution is dipped in a bath inside an ultrasonic generator and subjected to ultrasonic for two to three minutes in order to completely dissolve the dried SOF.

The SOF having been completely dissolved by the above-mentioned pretreatment is sent to a separator 100 to separate the nitropolycyclic aromatic hydrocarbon from other polycyclic components to obtain a nitropolycyclic aromatic hydrocarbon sample 110.
The nitropolycyclic aromatic hydrocarbon is sent to an auto-sampler 120 of the high-performance liquid chromatograph.

The sample sent out from the auto-sampler 120 is separated into the nitropolycyclic aromatic hydrocarbons of four substances, which are 1-nitropyrene, 1.3-dinitropyrene, 1. 6-dinitropyrene and 1. 8-dinitropyrene, in a separation column 130 maintained at a temperature of approximately 40 °C in a temperature-controlled tank 132. A silica gel/C8 column is used as the separation column 130.

Next, the nitropolycyclic aromatic hydrocarbon is sent to a reduction column 140 maintained at a temperature of approximately 80 °C in a temperature-controlled tank 142 in order to reduce the nitropolycyclic aromatic hydrocarbon to amino polycyclic aromatic hydrocarbon.
An alumina/Pt-Rh reduction column is used as the reduction column 140.

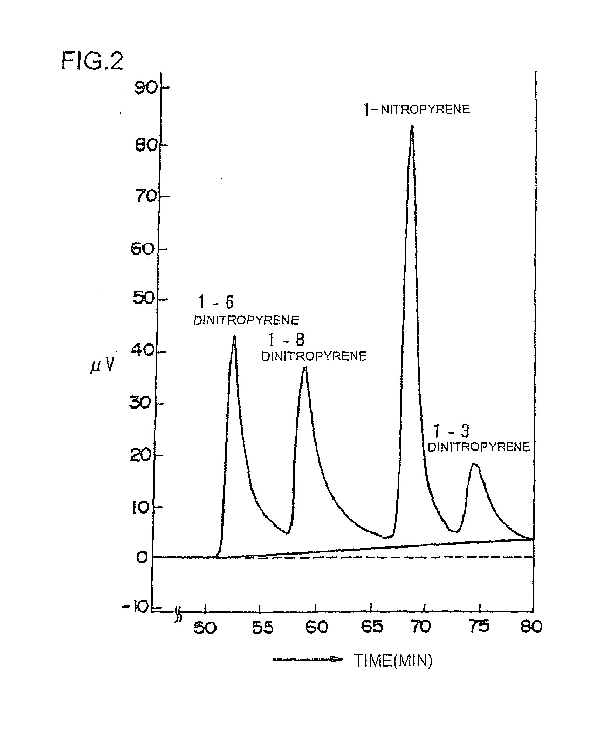

By using only these two columns, the above-mentioned four components of the nitropolycyclic aromatic hydrocarbons can be separated and subjected to detection using a fluorescence detector 160. The data obtained by the fluorescence detector 160 is sent to a data processing device 170 and subjected to processing.
It has been confirmed that the above-mentioned four components can be separated and detected, as illustrated in FIG. 2, by using a reference material containing the above-mentioned four components of the nitropolycyclic aromatic hydrocarbon. Further, it has been confirmed that the present measurement is quantitatively highly accurate, by using reference materials with the contents of the four components varied.
However, the diesel exhaust gas contains an interfering component whose retention time overlaps with the above-mentioned four components of the nitropolycyclic aromatic hydrocarbon, which may make direct quantity determination difficult.

Therefore, after passing the material through the reduction column 140, the material is further passed through a reverse phase column (ODS column) 150 maintained at a temperature of approximately 50 °C in a temperature-controlled tank 152, so that the target four components are not overlapped with the interfering component, and thereby, the material can be detected and quantified by the fluorescence detector 160 and the data processing device 170.

Further, the arrangement of the separation column 130 through the ODS analysis column 150 can be shuffled mutually.

### INDUSTRIAL APPLICABILITY

As described, the present invention enables to analyze the nitropolycyclic aromatic hydrocarbon contained in the exhaust of a diesel engine with high accuracy, so it can be applied to improve the purification technique of diesel engines.

### EXPLANATION OF REFERENCE NUMBERS

1 apparatus for analyzing nitropolycyclic aromatic hydrocarbon 100 separator for separating nitropolycyclic aromatic hydrocarbon from other polycyclic aromatic hydrocarbon
- 110: sample
- 120: auto-sampler
- 130: separation column
- 140: reduction column
- 150: ODS analysis column
- 160: fluorescence detector
- 170: data processing device

## Claims

1. An apparatus for analyzing nitropolycyclic aromatic hydrocarbon, comprising:
a separation column for separating an isomer of nitropolycyclic aromatic hydrocarbon;
a reduction column for aminating the separated nitropolycyclic aromatic hydrocarbon; and
a fluorescence detector.

2. An apparatus for analyzing nitropolycyclic aromatic hydrocarbon, comprising:
a separation column for separating an isomer of nitropolycyclic aromatic hydrocarbon;
a reduction column for aminating the separated nitropolycyclic aromatic hydrocarbon;
an analysis column for separating an interfering component contained in the detection material; and
a fluorescence detector.

3. The apparatus for analyzing nitropolycyclic aromatic hydrocarbon according to claims 1 or 2, wherein the separation column is a silica gel/C8 column.

4. The apparatus for analyzing nitropolycyclic aromatic hydrocarbon according to any one of claims 1 through 3, wherein the reduction column is an alumina/Pt-Rh reduction column.

5. A method for analyzing nitropolycyclic aromatic hydrocarbon, comprising:
a step of separating an isomer of nitropolycyclic aromatic hydrocarbon using a separation column;
a step of aminating the separated nitropolycyclic aromatic hydrocarbon using a reduction column; and
a step of performing fluorescence detection.

6. A method for analyzing nitropolycyclic aromatic hydrocarbon, comprising:
a step of separating an isomer of nitropolycyclic aromatic hydrocarbon using a separation column;
a step of aminating the separated nitropolycyclic aromatic hydrocarbon using a reduction column;
a step of separating an interfering component contained in the detection material; and
a step of performing fluorescence detection.

7. The method for analyzing nitropolycyclic aromatic hydrocarbon according to claims 5 or 6, wherein the separation column is a silica gel/C8 column.

8. The apparatus for analyzing nitropolycyclic aromatic hydrocarbon according to claims 5 or 6, wherein the reduction column is an alumina/Pt-Rh reduction column.
